Europäisches Patentamt

European Patent Office

Office européen des brevets

(11) Publication number: **0 535 684 A1**

# EUROPEAN PATENT APPLICATION

(21) Application number: **92116852.2**

(22) Date of filing: **01.10.92**

(51) Int. Cl.5: **H04N 7/137**

(30) Priority: **02.10.91 FI 914622**

(43) Date of publication of application:
**07.04.93 Bulletin 93/14**

(84) Designated Contracting States:
**DE ES FR GB IT NL SE**

(71) Applicant: **OY NOKIA AB**
**Etelaesplanadi 12**
**SF-00130 Helsinki(FI)**

(72) Inventor: **Haikonen, Pentti**
**Ruutikatu 10 B 39**
**SF-02600 Espoo(FI)**

(74) Representative: **Schroeter, Helmut et al**
**Schroeter, Fleuchaus, Lehmann Wehser,**
**Holzer & Gallo Patentanwälte Wolfratshauser**
**Strasse 145 Postfach 71 03 50**
**W-8000 München 71 (DE)**

(54) **A method for predictive video compression coding.**

(57) In a method for predictive video compression coding, image information is transmitted as successive image blocks each comprising n x m pixels, and (i) previously transmitted image information is searched to find a prediction block for a pixel block (A) to be transmitted by comparing the block with at least one previously transmitted image area (B) of equal size, and (ii) information proportional to the differences between the intensity values of the corresponding pixels of the block (A) to be transmitted and the found prediction block is transmitted to a receiver. In order that blocks corresponding in pattern to the block to be coded but differing from it in basic illumination could be used as a prediction block, and in order that the accuracy of the prediction blocks could be improved, the comparison is performed on the basis of pixel intensity values obtained by subtracting from the original intensity values ($A_{i,j}$, $B_{i,j}$) a value representing the basic illumination of each image block, and that when the prediction block is found, (i) a difference image calculated in a manner known *per se* pixel by pixel on the basis of the original pixel intensity values ($A_{i,j}$, $B_{i,j}$) is transmitted to the receiver, or (ii) a difference image calculated in a manner known *per se* pixel by pixel on the basis of said pixel intensity values is transmitted to the receiver as well as a difference value ($DC_e$) of the values representing the basic illuminations of the block to be transmitted and the prediction block.

FIG. 1

EP 0 535 684 A1

The invention relates to a method for predictive video compression coding. In the method, image information is transmitted as successive image blocks each comprising n x m pixels, and (i) previously transmitted image information is searched so as to find a prediction block for a pixel block to be transmitted by comparing the block to be transmitted with at least one previously transmitted image area of equal size, and (ii) information proportional to the differences between the intensity values of the corresponding pixels of the block to be transmitted and the found prediction block is transmitted to a receiver.

The invention also relates to methods according to the preamble portions of claims 7 and 8 for receiving a compressed video image.

In the interfield predictive coding, the image to be coded is divided into blocks of n x m pixels (usually n = m = 8), and the block to be transmitted is compared with a corresponding block of a previously transmitted field. If this block is approximately the same as the block to be transmitted, it can be used as a prediction image block, and so the transmitter calculates a difference image of the block to be transmitted and the prediction image block, which difference image consists of the differences calculated pixel by pixel between the intensity values of the blocks. As the receiver already has the prediction block data, only the difference image has to be transmitted to it. If the prediction block is very similar to the block to be coded, the difference image contains only a little information, and so it can be transmitted by a smaller number of bits than the image to be coded itself. In so-called motion compensation methods, not only the fully corresponding positions but also other positions in the neighbouring fields can be searched for the prediction block. The correspondence between the prediction block and the block to be transmitted is usually determined by calculating the absolute differences between the intensity values of the block to be transmitted and the block under analysis pixel by pixel and by summing these differences. If the resulting sum is smaller than a predetermined set value, the block under analysis is accepted as a prediction block. It is further to be mentioned that as used herein the term intensity value may refer to either grey or colour intensity values.

A disadvantage of the above-described well-known method is its behaviour when the image illumination varies locally or in time. In such cases a block corresponding in pattern to the block to be transmitted cannot be identified as a corresponding block, and, as a consequence, it cannot be used as a prediction block.

The object of the present invention is to improve the methods of the type described above so that, first, the blocks corresponding in pattern to the block to be transmitted but differing from it in terms of the basic illumination could also be used as prediction blocks, and, second, that the accuracy of the prediction blocks would be improved. This object is achieved by means of a method according to the invention which is used in connection with the transmission. The method has two different embodiments. In the first embodiment the method is characterized in that the comparison is performed on the basis of pixel intensity values obtained by subtracting from the original intensity values a value representing the basic illumination of each image block, and that when the prediction block is found, a difference image calculated in a manner known *per se* pixel by pixel on the basis of the original pixel intensity values is transmitted to the receiver. In the second embodiment the method is characterized in that the comparison is performed on the basis of pixel intensity values obtained by subtracting from the original intensity values a value representing the basic illumination of each image block, and that when the prediction block is found, a difference image calculated in a manner known *per se* pixel by pixel on the basis of said pixel intensity values is transmitted to the receiver as well as a difference value of the values representing the basic illuminations of the block to be transmitted and the prediction block.

The basic idea of the invention is to subtract a value representing the basic illumination of the block to be transmitted and the image block suggested as the prediction block from the intensity values of the respective blocks, at least the testing of the correspondence between the blocks and the searching of the prediction block being then performed on the basis of the intensity values so obtained. In addition, the difference image between the image block to be transmitted and the found prediction block can be calculated on the basis of the intensity values so obtained, and the difference value of the values representing the basic illuminations of the block to be transmitted and the prediction block, required for the reconstruction of the original image, can be transmitted to the receiver in addition to the difference image. The former embodiment is suitable for use especially in connection with coding techniques in which the difference value of the values representing the basic illuminations of the block to be transmitted and the prediction block is a distinct term as such, so that it need not be transmitted separately.

The methods according to the invention to be used at the reception, in turn, are characterized by what is disclosed in the characterizing portions of the attached claims 7 and 8.

In one preferred embodiment of the invention, the average of the intensity values of the image block is used as the value representing the basic illumination, which has proved to provide the best results in

2

practice. Another alternative would be to use e.g. the smallest intensity value of the block, which, however, does not provide equally good results especially in the case of a noisy image.

In the following the invention and its other preferred embodiments will be described in greater detail with reference to the examples of the attached drawings, wherein

Figure 1 is a block diagram illustrating a codec which realizes the method according to the basic embodiment of the invention; and

Figure 2 is a block diagram illustrating a codec which realizes the method according to the preferred embodiment of the invention.

To begin with, the intensity values (grey or colour intensity values) of the pixels of an n x m image block A are indicated with the reference $A_{i,j}$ ($1 \leq i \leq n$ and $1 \leq j \leq m$). The position of the pixels within the image block is as follows

$$
\begin{array}{llll}
A_{1,1} & A_{1,2} & A_{1,3} & \cdots \cdots A_{1,m} \\
A_{2,1} & A_{2,2} & A_{2,3} & \cdots \cdots A_{2,m} \\
\quad \cdot & & & \\
\quad \cdot & & & \\
\quad \cdot & & & \\
A_{n,1} & A_{n,2} & A_{n,3} & \cdots \cdots A_{n,m}
\end{array}
$$

Correspondingly, the intensity values of the pixels of an n x m image block B suggested as a prediction block are indicated with the reference $B_{i,j}$.

According to the invention a new image block a is first formed from the image block A to be transmitted, and a new image block b is formed from the image block B suggested as the prediction block, the intensity values $a_{i,j}$ and $b_{i,j}$ of the new image blocks being obtained by subtracting the average $ave\{A_{i,j}\}$ and $ave\{B_{i,j}\}$, respectively, of the intensity values of each image block from the intensity value of each pixel of the block:

(1)     $a_{i,j} = A_{i,j} - ave\{A_{i,j}\}$

(2)     $b_{i,j} = B_{i,j} - ave\{B_{i,j}\}$.

The values $ave\{A_{i,j}\}$, representing the average of the intensity values of the image block to be transmitted, and $ave\{B_{i,j}\}$, representing the average of the intensity values of the image block suggested as the prediction block, can be considered to describe the basic illumination of the image. A difference $DC_e$ between these values is then calculated:

(3)     $DC_e = ave\{A_{i,j}\} - ave\{B_{i,j}\}$.

The correspondence between the image blocks is determined by calculating a sum E of the absolute differences (absolute values of the differences) between the new intensity values $a_{i,j}$ and $b_{i,j}$:

$$
(4) \qquad E = \sum_{i,j}^{n,m} abs\{a_{i,j} - b_{i,j}\}
$$

If E is smaller than a predetermined set value $\delta$, it is considered that the blocks correspond to each other, and the block B is selected as the prediction block. If more than one image blocks are tested to find

3

the prediction block, the block giving the smallest value below the preset value $\delta$ is selected as the prediction block. However, if none of the suggested blocks meets the condition of Formula (4) ($E < \delta$), an image block B0 in which the intensity value of each pixel $B0_{i,j}$ is zero is taken as a prediction block.

In the following it is assumed that the block B has been selected as the prediction block. Differences $e_{i,j}$ between the intensity values of the image block to be transmitted and the prediction block are then calculated pixel by pixel:

$$(5) \qquad e_{i,j} = a_{i,j} - b_{i,j}.$$

These differences $e_{i,j}$ are coded in any known manner and transmitted to the receiver. The term $DC_e$ calculatedin accordance with Formula (3) is also transmitted.

The receiver reconstructs the image as the sum of the intensity values $B_{i,j}$ of the prediction block, the differences $e_{i,j}$ of the transmitted intensity values, and the transmitted basic illumination difference value as follows:

$$(6) \qquad A_{i,j} = B_{i,j} + e_{i,j} + DC_e$$

If the blocks differ from each other only in terms of the basic illumination, the terms $e_{i,j}$ approach zero, in which case it is enough to transmit the term $DC_e$ only. In this way, a marked further reduction will be obtained in the number of bits to be transmitted.

The method according to the invention may also be applied in limited form so that the comparison carried out in the search of the prediction block is realized in accordance with Formula (4) but when the prediction block is found, a difference image calculated in a manner known *per se* pixel by pixel on the basis of the original pixel intensity values $A_{i,j}$ $B_{i,j}$ is transmitted to the receiver. This embodiment is suitable for use especially in connection with coding techniques in which the difference value $DC_e$ of the values representing the basic illuminations of the block to be transmitted and the prediction block is a distinct term as such, so that it need not be transmitted separately.

The method according to the invention may also be realized by using the smallest intensity value of each image block as the value representing the basic illumination, the term $DC_e$ being thus calculated as a difference between the minimum values of the terms $A_{i,j}$ and $B_{i,j}$. A disadvantage therewith is, however, that the noise possibly present in the image may deteriorate the efficiency of the method.

According to the preferred embodiment of the invention, the correspondence between the block to be transmitted and the block suggested as the prediction block can also be determined by means of the sum of the absolute differences between the intensity values of the pixels of the respective blocks by first scaling the prediction block pixel intensity values reduced by the basic illumination by means of a coefficient k, so that Formula (4) will be:

$$(7) \qquad E = \sum_{i,j}^{n,m} abs \{a_{i,j} - k\, b_{i,j}\}$$

The coefficient k is selected so that the sum E of the absolute difference values is minimized. This value of k is transmitted to the receiver as additional information. After an acceptable prediction block has been found in this way, the differences $e_{i,j}$ are calculated as follows:

$$(8) \qquad e_{i,j} = a_{i,j} - k\, b_{i,j}.$$

In this case the receiver reconstructs the image as follows:

$$(9) \qquad A_{i,j} = k\, b_{i,j} + ave\{B_{i,j}\} + e_{i,j} + DC_e$$

In this way the method according to the preferred embodiment of the invention aims at compensating for a possible difference between the contrasts of the image block to be transmitted and the prediction block. If the prediction block corresponds in pattern to the block to be transmitted but differs from it in contrast and basic illumination, it is enough to transmit only the coefficient k and the term $DC_e$ to the

receiver, which involves a marked reduction in the number of bits.

Except that the correspondence determination according to Formula (7) can be used as an alternative for the correspondence determination according to Formula (4), it may also be used as an expedient for improving the accuracy of the prediction block found in accordance with Formula (4).

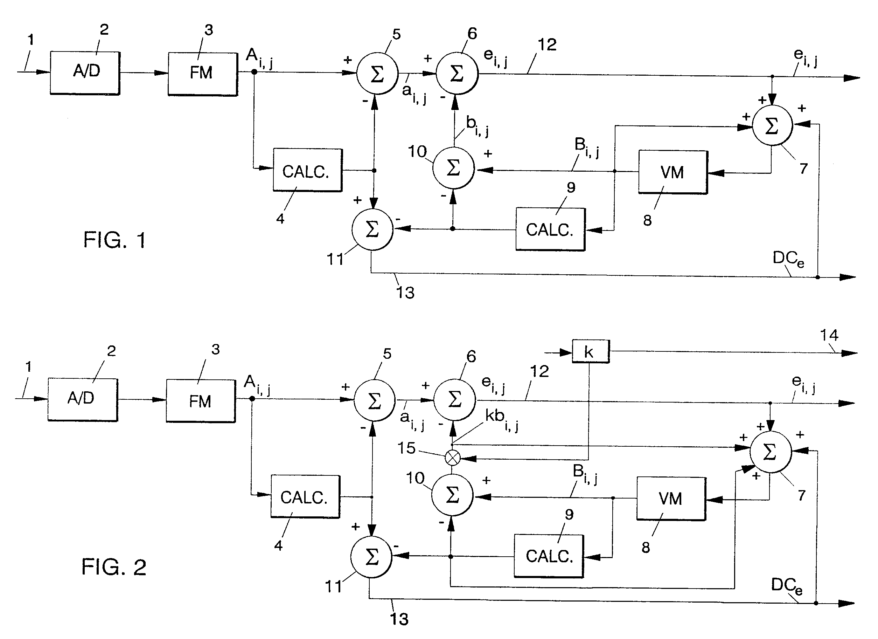

Figure 1 is a block diagram illustrating a codec which realizes the above-described basic embodiment of the method according to the invention. It is still assumed that the image block B has been accepted as the prediction block.

The codec comprises an A/D converter 2 in which an incoming video signal 1 is converted into digital form. The digital signal is stored field by field in a field memory 3 connected after the A/D converter. The output of the field memory is connected both to a calculator circuit 4 and to one input in a summing circuit 5. The calculator circuit 4 calculates an average $ave\{A_{i,j}\}$ of the intensity values of the pixels of each image block, and its output is connected to another (subtracting) input in the summing circuit 5, so that the summing circuit 5 calculates, at its output, the difference $a_{i,j}$ between the intensity value of each pixel and said average. This difference is applied to one input in a second summing circuit 6. An output of a third summing circuit 10 is connected to another (subtracting) input in the summing circuit 6, so that the summing circuit 6 calculates the differences $e_{i,j}$ between the intensity values of the block to be transmitted and the prediction block in accordance with Formula (5). An output 12 of the summing circuit 6, at which the difference according to Formula (5) appears, is connected not only to the line through possible additional coding stages (not shown) but also directly to one input in a fourth summing circuit 7. An output 13 of a fifth summing circuit 11 and an output of a video memory 8 are connected to two further inputs in the summing circuit 7. The output of the summing circuit 7, in turn, is connected to the input of the video memory 8 for reconstructing the image blocks used as prediction blocks in the video memory in accordance with Formula (6). The output of the video memory is also connected to a calculator circuit 9 and to another input in the third summing circuit 10. The calculator circuit 9 calculates the average $ave\{b_{i,j}\}$ of the intensity values of the pixels of the prediction block B at its output, and the average is applied both to the other (subtracting) input of the third summing circuit 10 and to the other (subtracting) input of the fifth summing circuit 11. Accordingly, the output 13 of the summing circuit 11 produces the difference value $DC_e$ of the values representing the basic illuminations in accordance with Formula (3), and the output of the summing circuit 10 produces the intensity values $b_{i,j}$ reduced by the value representing the basic illumination of the pixels of the prediction block. The output 13 of the summing circuit 11 is connected, except for the fourth summing circuit 7, to the line through possible additional coding stages (not shown).

Figure 2 is a block diagram illustrating a codec which realizes the above-described preferred embodiment of the method according to the invention. The codec corresponds otherwise to the codec shown in Figure 1 except that the intensity values $b_{i,j}$ at the output of the summing circuit 10, i.e. the values obtained by subtracting the value representing the basic illumination of the pixels of the prediction block from the original intensity values, are now multiplied by a scaling coefficient k; the value of k is applied as additional information to a line 14; and the reconstruction of the image blocks used as prediction blocks in the video memory 8 takes place in accordance with the Formula (9) by applying to the inputs of the summing circuit 7 not only the difference $e_{i,j}$ according to Formula (8) but also (i) from the output of a multiplier 15, the intensity values $b_{i,j}$ obtained by subtracting the value representing the basic illumination of the pixels of the prediction block from the original intensity values and multiplied by the coefficient k, (ii) from the output of the calculator circuit 9, the average $ave\{b_{i,j}\}$ of the intensity values of the pixels of the prediction block B, and (iii) from the output 13 of the summing circuit 11, the difference value $DC_e$ of the values representing the basic illuminations.

Even though the invention has been described above with reference to the example of the attached drawings, it is obvious that the invention is not restricted to it, but it can be modified in many ways and within the inventive idea disclosed in the attached claims. The search of the prediction block, for instance, may take place in many ways known *per se* from among one or more previously transmitted image areas. Furthermore, the correspondence between the image blocks can be determined in various ways. In place of the sum of the absolute differences, the sum of e.g. squared differences can be calculated.

## Claims

1. A method for predictive video compression coding, wherein image information is transmitted as successive image blocks each comprising n x m pixels, and wherein
   - previously transmitted image information is searched so as to find a prediction block for a pixel block (A) to be transmitted by comparing the block to be transmitted with at least one previously transmitted image area (B) of equal size, and

- information proportional to the differences between the intensity values of the corresponding pixels of the block (A) to be transmitted and the found prediction block is transmitted to a receiver, **characterized** in that the comparison is performed on the basis of pixel intensity values ($a_{i,j}$, $b_{i,j}$) obtained by subtracting from the original intensity values ($A_{i,j}$, $B_{i,j}$) a value representing the basic illumination of each image block, and that when the prediction block is found, a difference image calculated in a manner known *per se* pixel by pixel on the basis of the original pixel intensity values ($A_{i,j}$, $B_{i,j}$) is transmitted to the receiver.

2. A method according to claim 1, **characterized** in that the average ($ave\{A_{i,j}\}$, $ave\{B_{i,j}\}$) of the intensity values of each image block is used as the value representing the basic illumination.

3. A method according to claim 1 or 2, **characterized** in that the comparison is carried out by using values ($kb_{i,j}$) obtained by scaling the values ($b_{i,j}$) obtained by said subtraction by a coefficient k for the pixels of the prediction block.

4. A method for predictive video compression coding, wherein image information is transmitted as successive image blocks each comprising n x m pixels, and wherein
   - previously transmitted image information is searched so as to find a prediction block for a pixel block (A) to be transmitted by comparing the block to be transmitted with at least one previously transmitted image area (B) of equal size, and
   - information proportional to the differences between the intensity values of the corresponding pixels of the block (A) to be transmitted and the found prediction block is transmitted to a receiver, **characterized** in that the comparison is performed on the basis of pixel intensity values ($a_{i,j}$, $b_{i,j}$) obtained by subtracting from the original intensity values ($A_{i,j}$, $B_{i,j}$) a value representing the basic illumination of each image block, and that when the prediction block is found, a difference image calculated in a manner known *per se* pixel by pixel on the basis of said pixel intensity values ($a_{i,j}$, $b_{i,j}$) is transmitted to the receiver as well as a difference value ($DC_e$) of the values representing the basic illuminations of the block to be transmitted and the prediction block.

5. A method according to claim 4, **characterized** in that the average ($ave\{A_{i,j}\}$, $ave\{B_{i,j}\}$) of the intensity values of each image block is used as the value representing the basic illumination.

6. A method according to claim 4, **characterized** in that the difference image between the block to be transmitted and the prediction block is calculated by using values ($kb_{i,j}$) obtained by scaling the values ($b_{i,j}$) obtained by said subtraction by a coefficient k for the pixels of the prediction block, the coefficient k being selected so that it minimizes the sum of the absolute values of difference values $a_{i,j} - kb_{i,j}$, and that the value of the coefficient k is transmitted to the receiver.

7. A method for receiving a video image compressed as described in claim 4, wherein image information is received as successive image blocks (PN) each comprising n x m pixels, the image to be received being reconstructed in a receiver memory (8) as the reception proceeds, and the receiver searches the memory for each particular prediction block, **characterized** in that the receiver reconstructs the image block to be received by summing pixel by pixel the intensity value of the prediction block, the received difference of the intensity values and the received difference value ($DC_e$) of values representing basic illuminations.

8. A method for receiving a video image compressed as described in claim 6, wherein image information is received as successive image blocks (PN) each comprising n x m pixels, the image to be received being reconstructed in a receiver memory (8) as the reception proceeds, and the receiver searches the memory for each particular prediction block, **characterized** in that the receiver reconstructs the image block to be received by summing pixel by pixel the prediction block intensity value ($b_{i,j}$) obtained by subtracting the value ($ave\{B_{i,j}\}$ representing the basic illumination from the original intensity value ($B_{i,j}$) and multiplied by the received coefficient k, the value ($ave\{B_{i,j}\}$) representing the basic illumination of the prediction block, the received intensity value difference ($e_{i,j}$), and the received difference value ($DC_e$) of the values representing the basic illuminations.

FIG. 1

FIG. 2

European Patent
Office

EUROPEAN SEARCH REPORT

Application Number

EP    92 11 6852
Page 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | SPIE PROCEEDINGS - IMAGE PROCESSING AND ALGORITHMS AND TECHNIQUES vol. 1244, 12 February 1990, BELLINGHAM, WASHINGTON, US; pages 355 - 366 M.GILGE 'Motion estimation by scene adaptive block matching (SABM) and illumination correction' | 1,2 | H04N7/137 |
| Y | * Section 4:'Illumination correction' on pages 362-265 * | 3 | |
| A | | 4-8 | |
| Y | US-A-4 809 067 (KIKUCHI ET AL.) | 3 | |
| A | * abstract; figure 19 * * column 17, line 15 - column 18, line 60 * | 1-2,4-8 | |
| A | US-A-4 278 996 (NETRAVALI ET AL.) * abstract; figures 3,6 * | 1-8 | |
| A | ELECTRONICS AND COMMUNICATIONS IN JAPAN, PART I vol. 72, no. 9, September 1989, NEW YORK US pages 35 - 44 H.WATANABE ET AL. '64 KBIT/S video coding equipment using adaptive tree-search vector quantization' * figures 1,6 * | 3,6,8 | TECHNICAL FIELDS SEARCHED (Int. Cl.5)<br><br>H04N |
| A | US-A-4 661 849 (HINMAN) * column 7, line 4 - line 15; figure 2 * | 3,6,8 | |

-/--

The present search report has been drawn up for all claims

| Place of search | Date of completion of the search | Examiner |
|---|---|---|
| THE HAGUE | 08 JANUARY 1993 | GIANNOTTI P. |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | ICASSP 86 - INTERNATIONAL CONFERENCE ON ACOUSTICS, SPEECH AND SIGNAL PROCESSING vol. 2/4, 7 April 1986, IEEE, NEW YORK, US, pages 989 - 992 R.R.FURNER ET AL. 'Motion compensated vector quantization' | | |

TECHNICAL FIELDS SEARCHED (Int. Cl.5)

The present search report has been drawn up for all claims

| Place of search | Date of completion of the search | Examiner |
|---|---|---|
| THE HAGUE | 08 JANUARY 1993 | GIANNOTTI P. |

EPO FORM 1503 03.82 (P0401)